## Europäisches Patentamt
## European Patent Office
## Office européen des brevets

(11) Publication number: **0 154 300**
**A2**

(12) # EUROPEAN PATENT APPLICATION

(21) Application number: 85102245.9

(22) Date of filing: 28.02.85

(51) Int. Cl.⁴: **H 04 N 5/278**

(30) Priority: 28.02.84 JP 38312/84

(43) Date of publication of application:
11.09.85 Bulletin 85/37

(84) Designated Contracting States:
CH DE FR GB LI

(71) Applicant: **MITSUBISHI DENKI KABUSHIKI KAISHA**
2-3, Marunouchi 2-chome Chiyoda-ku
**Tokyo 100(JP)**

(72) Inventor: **Fukushima, Nobuo c/o Mitsubishi Denki K.K.**
**Nagasaki Works No. 6-14, Maruou-machi**
**Nagasaki-shi Nagasaki(JP)**

(72) Inventor: **Iwata, Shuji c/o Mitsubishi Denki K.K.**
**Product Dev. Lab. 1-1, Tsukaguchi Honmachi 8-chome**
**Amagasaki-shi Hyogo(JP)**

(74) Representative: **Lehn, Werner, Dipl.-Ing. et al,**
**Hoffmann, Eitle & Partner Patentanwälte Arabellastrasse**
**4 (Sternhaus)**
**D-8000 München 81(DE)**

(54) Signal processing device for digital signal processing and multiplexing.

(57) A signal processing device in which a video signal (1) and a digital signal are subjected to digital processing simultaneously in such a manner that the number of A/D or D A converters is reduced. An analog input video signal (1) is A'D converted to produce a cyclical signal synchronized with a horizontal or vertical synchronizing signal contained within the video signal. The signal so converted is then processed via an arithmetic unit (23, 24, 26), and then other digital information may be added thereto. The finally processed signal (31) is transmitted via an internal bus (27) in synchronization with the horizontal or vertical synchronizing signal component of the video signal.

*FIG. 2*

EP 0 154 300 A2

SIGNAL PROCESSING DEVICE FOR DIGITAL

SIGNAL PROCESSING AND MULTIPLEXING

The present invention relates to a transmission processing device for digitally processing a video signal and for transmitting to a terminal a signal which is obtained by adding other information to the processed signal.

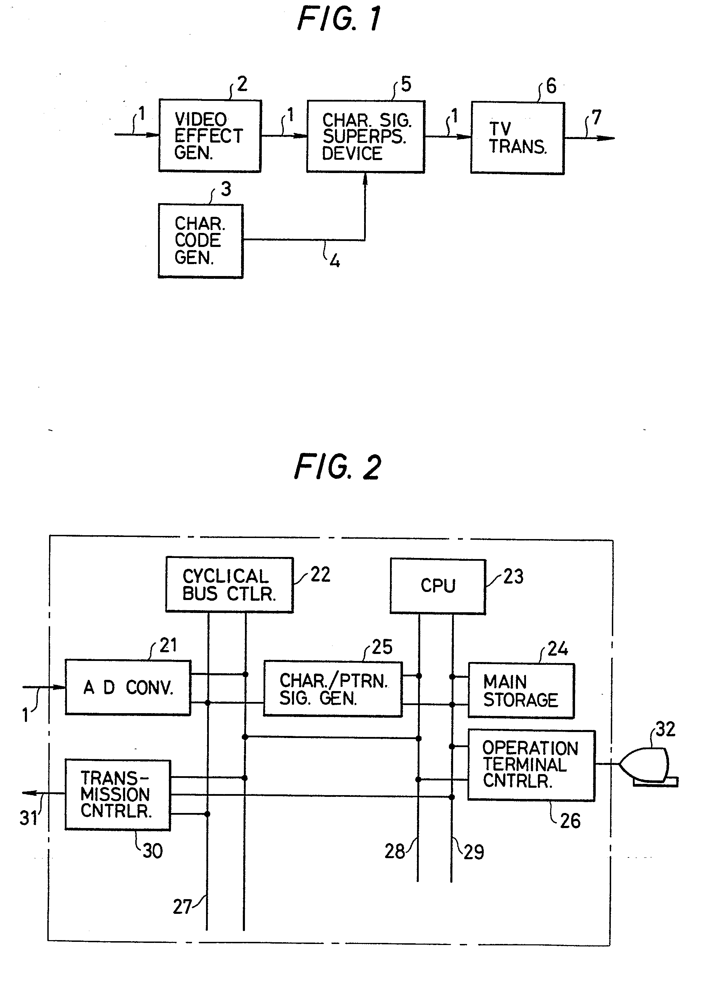

Conventionally, there has been known a device such as shown in Fig. 1 of the accompanying drawings. Referring to Fig. 1, there is illustrated a video signal 1, a digital video effect generator 2, a character code generator 3, a character signal 4, a character signal superimposing device 5, a television transmitter 6, and a transmitted television signal 7.

The operation of this device will be explained. The video signal 1 is subjected to processing such as magnification, reduction, or the like, a digital circuit including an A/D converter, a digital memory, etc., in the digital video effect generator 2, converts the processed video into an analog video signal, and then applies the analog signal to the character signal superimposing device 5. Information 4 to be multiplexed with the video signal is generated by the character code generator 3 and applied to the character signal superimposing device 5. The

- 2 -

character signal superimposing device 5 multiplexes the video signal from the digital video effect generator 2 and the character signal 4 from the character code generator 3 to form a video signal, which is applied to the television transmitter 6. The television transmitter modulates the video signal to produce a television signal and transmits it on a transmission line 7.

In the conventional device arranged as described above, the video signal is subjected to digital processing, converted again into an analog signal, and then multiplexed with character information. Thus, an extra analog multiplexing device is required.

The present invention is intended to eliminate the disadvantages of the conventional device described above. Accordingly, the present invention provides a device which comprises means for processing a video signal through arithmetic and logical operations after the video signal is A/D converted, means for adding other digital information to the processed signal, and an internal bus for cyclically transmitting the processed signal in synchronism with the video signal, whereby it is made possible to produce a multiplexed signal by means of a single device.

For a better understanding of the invention, and to show how the same may be carried into effect, reference will now be made, by way of example, to the accompanying drawings, in which:

Fig. 1 is a block diagram showing a conventional device; and

Fig. 2 is a block diagram showing a preferred embodiment of a signal processing device according to the present invention.

Referring to the drawings, a preferred embodiment of the present invention will be described.

In Fig. 2 is illustrated an A/D converter and a frame memory 21, a cyclical bus controller 22, a CPU 23, a main storage device 24 (e.g. RAM), a character/ pattern signal generator 25, an operation terminal controller 26, a cyclical bus 27, a program control channel 28, a direct memory access bus 29, a transmission controller 30, an output signal 31, and an operating terminal 32.

An input video signal 1 is A/D converted by the A/D converter 21 and temporarily stored in the frame memory. Data is sent out cyclically onto the bus 27 and a further bus according to the instructions of the controller 22 in synchronism with the horizontal/vertical synchronizing signal of video signal 1. On the other hand, textual and numerical information formed by a computer function constituted by items 23, 24, 26, 32, 29 and 28 is transmitted to the character/pattern signal generator 25, converted into a video pattern, and sent out onto the cyclical bus 27. The thus transmitted signal on the cyclical bus is superimposed with command information by the transmission controller 30, D/A converted, and then sent out as an output signal 31, which may supply an external display device, a TV transmitter or other external utilization means.

In addition, the digital data on the further bus coming from the A/D converter 21 is supplied to program control channel 28 whereby it may be subject to digital processing, e.g. arithmetic and logical operations for magnification, reduction or the like. The processed data may be supplied directly to transmission controller 30 via bus 29 under the control of the CPU 23 according to instructions received from operation terminal controller 26.

Although the signal 31 is transmitted after being D/A converted in the above-mentioned embodiment, the digital signal may be sent out without modification with the same effects.

As described above, according to the present invention, all signal processing is performed using digital signals so that the signal processing can be performed with no deterioration in quality of information. Further, the device can be produced with a low cost because no extra A/D and D/A converters are used.

**0154300**

Claims:

1.   A signal processing device in which a video signal (1) and a digital signal are subjected to digital processing at the same time, characterised by: means (21) for A/D converting an input analog video signal (1) to produce a cyclical signal in synchronism with a horizontal/vertical signal synchronizing signal of said video signal (1); means (23, 24, 26, 28, 29) for processing the converted digital signal through arithmetic and logical operations; means (25) for adding other digital information to the processed signal; an internal bus (27) for cyclically transmitting the processed signal in synchronism with the horizontal/vertical synchronizing signal of the video signal (1); and means (30) for coupling said bus to external utilization means, whereby it is made possible to directly transmit digital multiplexed data to an external display device.

2.   A device according to claim 1 wherein means are provided to subject said data to digital-to-analog conversion before transmission.

3.   A device according to claim 1 or 2 wherein said processing means comprises a CPU (23), a main storage means (24) and an operation controller (26).

## FIG. 1

## FIG. 2